# EUROPEAN PATENT SPECIFICATION

(11) **EP 2 817 132 B1**
(45) Date of publication and mention of the grant of the patent: **27.12.2017**
(21) Application number: 13751223.2
(22) Date of filing: 22.02.2013
(51) Int. Cl.: B65B 47/10, B65B 9/04, C11D 17/04

(54) **TOOLING FOR MANUFACTURING A UNIT DOSE POUCH**
WERKZEUG ZUR HERSTELLUNG EINES EINHEITSDOSISBEUTELS
OUTILLAGE POUR FABRIQUER UNE POCHETTE DE DOSE UNITAIRE

(30) Priority: 22.02.2012 US 201261601843 P
(43) Date of publication of application: 31.12.2014
(73) Proprietor: Henkel IP & Holding GmbH, 40589 Düsseldorf (DE)
(72) Inventor: EMERSON, Reem A., Wilton, CT 06897 (US); GRAHAM, Troy R., Wilton, CT 06897 (US); NIXON, Anne E., Wilton, CT 06897 (US); SEARS, Katherine, Wilton, CT 06897 (US)
(74) Representative: Donald, Jenny Susan
(86) International application number: PCT/US2013/027410
(87) International publication number: WO 2013/126760

(56) References cited:
- US-A- 4 571 924
- US-A- 4 571 924
- US-A1- 2008 041 020
- US-A1- 2010 139 695
- US-B1- 6 376 441
- US-B1- 6 376 441

## Description

### BACKGROUND

### Field

The present invention relates generally to tooling, and more particularly to tooling for manufacturing a unit dose pouch.

### Background Art

Recently, it has become common to package doses of certain chemical compositions, such as dishwashing or laundry detergents, in water soluble or water dispersible films to be used in dishwashing or laundry machines. Some users consider such unit dose pouches to not only be aesthetically pleasing, but also convenient because the pouches eliminate the need for the user to measure and pour the detergent, which lessens the likelihood of overdosing or underdosing. Unit dose pouches further serve to minimize the possibility of skin contact with the detergent, which may contain irritating chemicals.

Some unit dose pouches include multiple compartments containing chemical compositions separated from one another by a barrier of water soluble or water dispersible film. For example, U.S. Patent No. 7,439,215 describes dishwashing compositions enclosed within a multi-chambered water-soluble film pouch, with one composition (e.g., a powdered detergent composition) contained in one compartment, and a second composition (e.g., a liquid rinse aid) contained in a separate compartment.

Several methods are available for manufacturing unit dose pouches. One approach is described in U.S. Patent No. 3,218,776. This patent describes a packaging apparatus including a rotating drum having a plurality of cavities formed therein. A sheet of film is drawn into the cavities to form pockets as the drum rotates. When the cavity reaches the top of the drum, each pocket is then filled with an appropriate amount of detergent composition. As the drum continues to rotate, the pockets are sealed, cut apart, and dropped onto a delivery conveyor.

Another approach for manufacturing unit dose pouches is described in U.S. Patent No. 7,797,912. This patent describes a method of manufacturing unit dose pouches with a horizontal motion thermoforming machine. In this method, a sheet of film is located over a substantially planar mold containing a plurality of cavities in a two-dimensional array, each cavity being surrounded by a planar surface of the mold on all sides. The sheet of film is drawn into the cavities to form pockets. After the pockets are formed, the sheet of film is then moved to a filling station to be filled and later to a sealing station to be sealed. Support means, such as wires or rails are used to support the sheet of film as it progresses between stations.

An approach for manufacturing multi-phase melt cast toilet bars is described in U.S. Patent No. 6,376,441.

An approach for manufacturing porous pouches containing a granular product is described in U.S. Patent No. 4,571,924.

### BRIEF SUMMARY

The present invention relates to tooling for manufacturing one or more unit dose pouches. In one embodiment of the invention, the tooling comprises a mold, a cavity formed within the mold, the cavity being open at a top surface of the mold, and a divider that forms a sealing surface for sealing material disposed in the cavity, and the divider is removably fixed within the cavity to vary the volume of the cavity. In one embodiment, the divider forms a sealing surface along a top edge thereof for sealing material disposed in the cavity. In other embodiments, the sealing surface extends all the way to the walls of the cavities to create a multiple compartment unit dose. In other embodiments, the dividers form a decorative seal pattern in the pouch without separating the unit dose into compartments.

In one embodiment, a method of manufacturing a unit dose pouch includes inserting a removable divider into a mold, the divider forming a sealing surface for sealing material disposed in the cavity, drawing a first film into the cavity to create one or more pockets defined by the divider, filling the one or more pockets with detergent, placing a second film on top of the filled one or more pockets, and sealing the first and second film together along the sealing surface.

Because the divider is removably fixed within the cavity, it may be replaced with other dividers having different sealing surfaces without the need for the user to change the mold or cavity itself. This allows for rapid concept testing in research and development project phases to create differentiated unit dose shapes, compartment configurations, and/or sealing patterns. If scaled up to production volumes, such tooling provides for quick and cost-effective product changeovers.

Additional features of the invention will be set forth in the description that follows, and in part will be apparent from the description, or may be learned by practice of the invention. Both the foregoing general description and the following detailed description are exemplary and explanatory and are intended to provide further explanation of the invention as claimed.

### BRIEF DESCRIPTION OF THE FIGURES

The accompanying figures, which are incorporated herein, form part of the specification and illustrate exemplary embodiments of the present invention. Together with the description, the figures further serve to explain the principles of, and to enable a person skilled in the relevant art(s) to make and use the exemplary embodiments described herein.
FIG. 1 is a front perspective view of a mold in accordance with an embodiment of the present invention.
FIG. 2 is a cross-sectional view of an embodiment of the mold of FIG. 1.
FIG. 3 is a cross-sectional view of an embodiment of the mold of FIG. 1.
FIG. 4 is a front perspective view of a divider in accordance with an embodiment of the present invention.
FIG. 5 is a front perspective view of an alternative mold in accordance with another embodiment of the present invention and the divider of FIG. 2 before the divider is inserted into the mold.
FIG. 6 is a front perspective view of the mold of FIG. 3 and the divider of FIG. 2 after the divider is fully inserted into the mold.
FIG. 7 is a top plan view of the mold and divider of FIG. 4.
FIG. 8 is a front perspective view of a mold and divider in accordance with another embodiment of the present invention before the divider is inserted into the mold.
FIG. 9 is a front perspective view of a mold and divider in accordance with another embodiment of the present invention with the divider fully inserted into the mold.

### DETAILED DESCRIPTION

The following detailed description refers to the accompanying figures, which illustrate exemplary embodiments. Other embodiments are possible. Therefore, the following detailed description is not meant to be limiting. The operation and behavior of the embodiments presented are described with the understanding that modifications and variations may be within the scope of the present invention.

As described above, several methods exist for manufacturing unit dose pouches. These methods typically include drawing a first film into a mold cavity to create a pocket, filling the pocket with detergent, placing a second film on top of the filled pocket, sealing the first and second film together, and separating the packages.

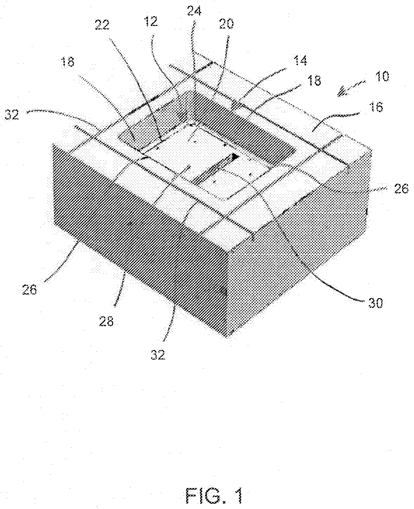

Referring to the embodiment illustrated in FIG. 1, a mold is shown generally at 10. Mold 10 can be configured for use with any suitable unit dose manufacturing method or apparatus described herein. For example, mold 10 can be attached to, formed within, or in the form of a rotatable drum, such as the rotatable drum of U.S. Patent No. 3,218,776. Mold 10 can include one or more cavities 12 formed within mold 10. A sheet of film can be drawn into cavities 12 to form pockets as the drum rotates. When a given cavity reaches the top of the drum, each pocket can then be filled with a desired amount of detergent composition. As the drum continues to rotate, the pockets can be sealed, cut apart, and/or dropped onto a delivery conveyor. Although only one cavity is shown in FIG. 1, multiple cavities 12 may be formed within mold 10 in order to produce multiple unit dose pouches. Such multiple cavities 12 may be aligned in columns or rows along the top surface 16 of mold 10 or in any other suitable formation. Cavity 12 is shown as being substantially rectangular and sized to create a unit dose pouch having a volume from about 5mL to about 70 mL and dimensioned to fit a conventionally sized detergent dispenser compartment. Cavity 12 may, however, be any other suitable shape, such as an ellipse, racetrack, hexagon, square, circle, etc. Cavity 12 may alternatively be sized to create larger or smaller unit dose pouches as desired.

Cavity 12 includes side walls 18 extending from a bottom surface 20 towards an opening 14 at top surface 16 of mold 10. Bottom surface 20 is substantially planar and horizontal. In other embodiments, bottom surface 20 may be non-planar and in a shape as desired for one or more ornamental and/or functional purposes. For example, bottom surface 20 may include one or more peaks and/or valleys designed to create a unit dose pouch having a corresponding shape. Bottom surface 20 may be formed within mold 10 or may alternately be a separate piece configured to be adjustable therein. For example, bottom surface 20 may be configured to adjust in an up-and-down direction or at an angle in order to change the volume and/or shape of cavity 12.

Side walls 18 are substantially planar and vertical. In other embodiments, side walls 18 may extend at one or more non-vertical angles as desired for one or more ornamental and/or functional purposes. For example, side walls 18 may be set at a draft angle to facilitate the act of drawing the film into cavity 12 and ejecting the unit dose pouch from cavity 12. Additionally, or in the alternative, side walls 18 may be rounded, curved, bent, or any other suitable shape.

Cavity 12 shown in FIG. 1 includes rounded corners 22 between side walls 18 and bottom surface 20, as well as rounded corners 24 between side walls 18 themselves. In other embodiments, corners 22 and/or 24 may be rectangular, angled, or any other suitable shape. Likewise, edges 26 between side walls 18 and top surface 16 are shown as being rectangular, but may be rounded, angled, or any other suitable shape.

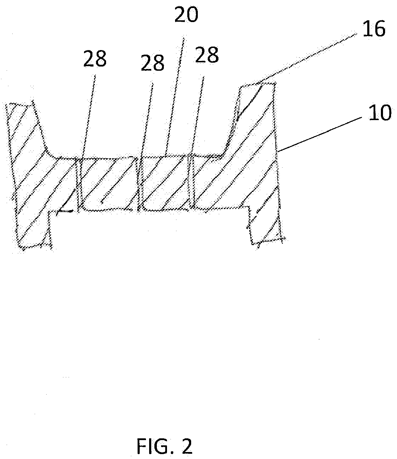

Bottom surface 20 comprises one or more holes 28 which allow film to be vacuum formed along bottom surface 20, as described below. For example, FIG. 2 shows a cross-sectional view of an embodiment of mold 10 including exemplary holes 28 formed therein. Vacuum holes 28 are shown as being relatively small. Suitable diameters for vacuum holes 28 may range from about 0.1 mm to about 20 mm depending on the size and shape of the cavity, thickness of the film, as well as other factors. Vacuum holes 28 are shown as being located on bottom surface 20 within the mold. In other embodiments, at least some of holes 28 are located in side walls 18, top surface 16 of mold 10, and/or other suitable locations. For example, holes 28 may be located close to the outside edges of top surface 16, and/or along the edges or corners of cavity 12 and mold 10.

One or more rows of holes 28 may be present along one or more of the various surfaces of mold 10. Holes 28 may further be arranged to facilitate uniform, consistent tension of the film to reduce the chance of creating wrinkles in the film during the vacuum process.

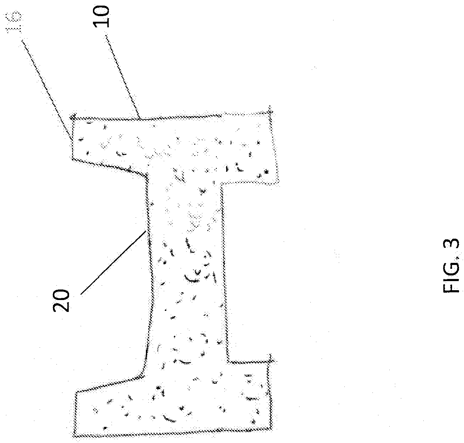

Mold 10 can be made of steel, aluminum, plastic, or any other suitable material or combination of materials. The choice of materials of mold 10 or any other part described herein can be informed by the requirements of mechanical properties, temperature sensitivity, optical properties such as dispersion, moldability properties, or any other factor apparent to a person having ordinary skill in the art. In some embodiments, a portion of mold 10 or the entire mold 10 can be made of a porous material, such as an air-permeable micro-porous aluminum material. In some embodiments, the porous material can reduce hole-related film stress during the vacuum process. For example, the porous material can provide a more evenly distributed vacuum load, which can result in reduced failure rates of the unit dose pouch. Suitable porous materials can include METAPOR® brand materials, which are manufactured by Portec-North America of Studio City, California. In one embodiment, such porous material can be used instead of holes formed within mold 10, such as holes 28. The pores of the porous material can be configured to allow a film to be vacuum formed into the cavity. For example, FIG. 3 shows a cross-sectional view of mold 10 formed of a porous material without separate holes 28 formed therein. In another embodiment, mold 10 can be made of porous material but also include holes 28 formed within mold 10 either on the same surface or on separate surfaces.

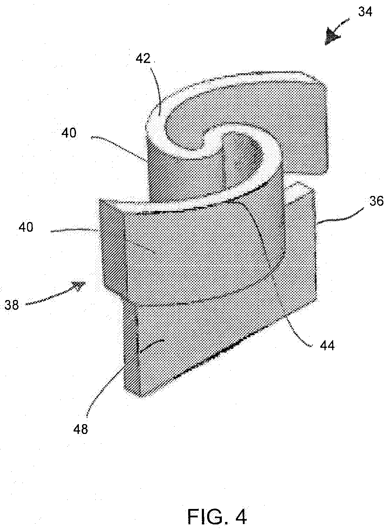

A slot 30 is formed within bottom surface 20 of cavity 12. As described below with respect to FIGs. 4-6, slot 30 is shown as a narrow and elongated opening sized to securely receive a removable divider for use with the tooling. Slot 30 may be any suitable shape for receiving the divider, such as a circle or square. In an embodiment, the slot is tolerance to snugly fit the removable divider in order to substantially prevent the divider from vibrating, racking, or otherwise moving when the tooling is in use. Slot 30 is shown as being formed in the center of bottom surface 20 of cavity 12. However, slot 30 may be formed at an end of bottom surface 20, along side wall 18, or any other suitable surface.

Top surface 16 of mold 10 is substantially horizontally planar and serves as a sealing surface for sealing together material disposed in the cavity, such as a portion of two or more layers of film. Top surface 16 may alternatively be curved, angled, or any other suitable non-planar shape to serve as a sealing surface. Top surface 16 includes cutting channels 32 formed therein. Cutting channels 32 facilitate the cutting of the film once the unit dose pouch is sealed in order to define each individual pouch. Longitudinal cuts are made by one or more tools having cutting edges extending into cutting channels 32.

Turning now to FIG. 4, a front perspective view of a divider 34 is shown. Divider 34 includes a tab 36 connected to a partition 38. Tab 36 is sized to be received in slot 30 and includes substantially vertical planar tab side walls 48 sized to engage with corresponding side walls within slot 30. Partition 38 includes substantially vertical side walls 40 extending from a substantially horizontally planar divider sealing surface 42 for sealing together material disposed in the cavity, such as a portion of two or more layers of film. Edge 44 between side wall 40 and sealing surface 42 is shown as substantially square. In alternative embodiments, edge 44 may be rounded, angled, or any other suitable shape. Like top surface 16 of mold 10, sealing surface may alternatively be curved, angled, or any other suitable non-planar shape to serve as a sealing surface. The planar surface of side walls 40 extends to tab 36. However, in alternative embodiments, side walls 40 may include openings therein or may otherwise not fully extend to tab 36. For example, in an embodiment, side walls 40 are in the shape of a ladder to connect tab 36 to sealing surface 42. Alternatively, one or more struts or braces, or any other suitable connector, may connect tab 36 to sealing surface 42. Sealing surface 42 and partition side wall 40 are both curved in a swirl-shaped ornamental pattern. Any other suitable ornamental or functional pattern may alternatively be used. In alternative embodiments, the sealing surface and the partition side walls are different shapes. Side walls 40 may further be set at a draft angle to facilitate the act of drawing film into cavity 12 and ejecting the unit dose pouch from cavity 12.

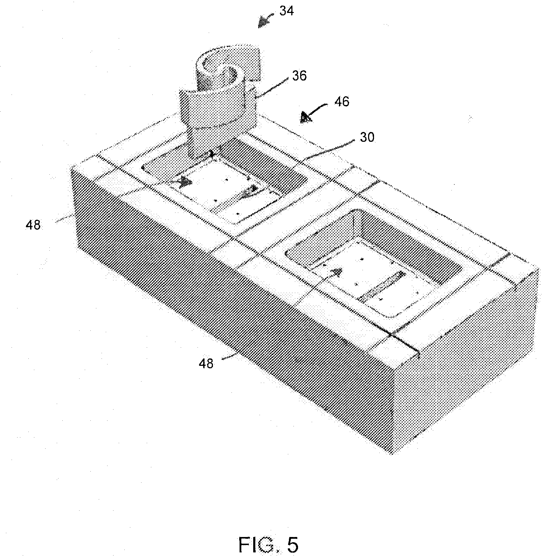

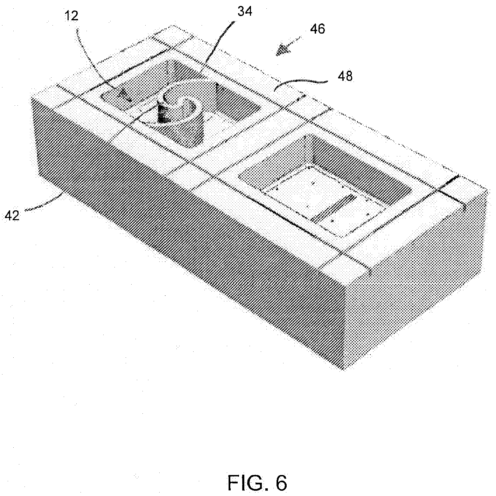

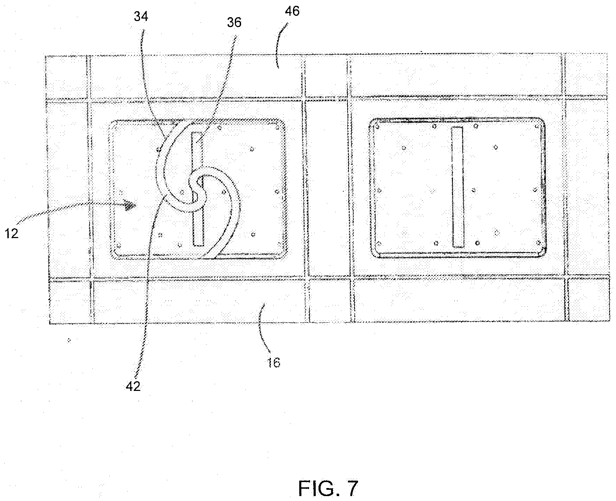

FIGs. 5 and 6 show front perspective views of an alternative mold 46 and divider 34 before and after divider 34 is inserted into mold 46. FIG. 7 shows a top plan view of the arrangement of FIG. 6. Mold 46 is identical to mold 10, except it includes two cavities 12 arranged side by side. For the sake of convenience, the features described with respect to mold 46 are labeled with the same reference numerals as the features described with respect to mold 10, as described above. Mold 46 may alternatively include additional cavities 12 arranged in any suitable arrangement, such as a grid including multiple columns and rows.

Tab 36 is sized to fit snugly in slot 30 and remain removably fixed therein via a friction fit. Tab 36 may be removably fixed within slot 30 through any other suitable means and may be more securely fixed to slot 30 via a press fit, adhesives, as well as any suitable mechanical attachment, such as a bolt, clamp, clevis, hook, latch, lock, pin, rivets, screws, snaps, spring detents, magnets, or the like. In one embodiment, tab 36 is screwed into slot 30.

As shown in FIG. 6, when divider 34 is inserted into cavity 12, it serves to vary the volume of cavity 12, as well as affect the shape of the film drawn into the cavity. Divider 34 extends to opposite facing walls of cavity 12 to create a multi-chambered unit dose. Divider 34 may alternatively extend to only a single wall, may extend to three or more walls, or may not extend to any walls. In alternative embodiments, the divider can serve to create a single-chambered unit dose having a decorative seal pattern. In some embodiments, sealing surface 42 is in the shape of a ring, or some other closed shape, so as to create a multi-chambered unit dose wherein one of the chambers is enclosed entirely within divider 34.

Sealing surface 42 is flush and co-planar with top surface 16 of mold 46 when divider 34 is fully inserted in cavity 12. Sealing surface 42 may alternatively be offset from top surface 16 if desired.

To create a unit dose pouch using the above tooling, a first film is formed into cavity 12 and over divider 34 to produce a non-planar sheet containing one or more pockets able to retain the one or more detergent compositions. The film used in the above tooling may be made from a water-soluble material which either dissolves, ruptures, disperses, or disintegrates upon or shortly after contact with water, thereby automatically releasing the detergent composition contained within the pouch. The film may, for example, be formed by casting, blow-molding, extrusion, blown extrusion, or any other suitable method.

One polymer suitable for use is polyvinyl alcohol (PVA) water soluble film sold under trade name Monosol®, which is produced by MonoSol LLC of Merrillville, Indiana. Suitable films made of cellulose ethers, polyethylene oxide, starch, polyvinylpyrrolidone, polyacrylamide, polyacrylonitrile, polyvinyl methyl ether-maleic anhydride, polymaleic anhydride, styrene maleic anhydride, hydroxyethylcellulose, methylcellulose, polyethylene glycols, carboxymethylcellulose, polyacrylic acid salts, alginates, acrylamide copolymers, guar gum, casein, ethylene-maleic anhydride resins, polyethyleneimine, ethyl hydroxyethylcellulose, ethyl methylcellulose, hydroxyethyl methylcellulose, and/or mixtures thereof, may also be used.

Unit dose pouches created with the above tooling may be filled with any suitable detergent compositions, such as powder, liquid, gel, paste, and/or wax. Suitable powder compositions may include traditional solid materials used in dishwashing or laundry detergent, such as builders, alkalinity sources, enzymes, bleaches, etc. The powder composition may be in the form of dry powder, hydrated powder, agglomerates, encapsulated materials, extrudates, tablets or mixtures thereof. Suitable liquid compositions include traditional liquid materials used in dishwashing detergents, such as non-ionic surfactants.

In unit dose pouches having multiple compartments, each compartment may include a different composition, such as a liquid composition in a first compartment and a solid composition in a second compartment. In particular, the compartments may include compositions that are incompatible or which are preferably delivered at different times of the dishwashing or laundering process.

The pouches may be vacuum-formed. In vacuum-forming, a vacuum is applied to cavity 12 to draw a layer of film covering opening 14 into cavity 12 and over divider 34 to define one or more pockets. This process typically results in a flange of film extending from the edges of the one or more pockets which is later used to assist in sealing the pouch. In the case of unit dose pouches having multiple compartments, each compartment may be the same size, having the same internal volume, or may be different sizes having different internal volumes.

Heat may be used to assist in the forming process. Any suitable means for elevating the temperature of the mold and/or film may be used, for example, by applying a hot item onto the film or mold or passing the film or mold under a heating element or through hot air.

The film may additionally be wetted by any suitable means to assist in the forming process. For example, the film may be sprayed by a wetting agent (including water, solutions of the film material or plasticisers for the film material), prior to feeding it onto the mold, or by wetting the surface or by applying a wet item onto the film.

As described above, mold 46 may include a plurality of cavities 12 and mold 46 may have any width, typically depending on the number of rows of cavities 12 across the width, the size of cavities 12 and the size of the spacing between cavities 12. When the tooling is designed to operate in a horizontally moving thermo forming machine the longitudinal dimension of mold 46 may have any length, typically depending on numerous factors, such as the number of process steps required to take place on mold 46, the time required per step, and the speed of the surface needed for these steps.

Once the one or more pockets are formed, each pocket is filled with its respective detergent composition, and a second film is placed on the flange and across each pocket. The second film may or may not be thermoformed. Each pocket may be completely filled, or only partly filled. Such partial filling may reduce the risk that the pouch will rupture if subjected to shock. Such partial filling may additionally reduce the risk of leakage if the container is subjected to high temperatures.

One well known process of filling the pouches is flood dosing. In this process, a series of open pouches pass under a fixed dosing unit which doses a set amount or volume of product per time unit. Another well-known process of filing is known as continuous motion in line filling. This process uses a dispensing unit having a plurality of nozzles positioned above the open pouches. The dispensing unit rotates in continuous motion. The nozzles move with the same speed as the pouches and in the same direction, such that each open pouch is under the same nozzle or nozzles for the duration of the dispensing step. After the filling step, the nozzle rotates to start another filling step.

A third process for filling the open pouches is a reciprocating-motion-filling method. This process uses a moving filling station which typically includes a series of nozzles. The nozzles each move with the same speed as the open pouches and in the same direction as the detergent is dispensed into the open pouches. Then, when each pouch is full, the nozzle stops moving with the pouch and returns to its original position above a new set of open pouches as the process is repeated.

Once the pockets are filled, they are then ready to be covered with a second film and sealed together. The second film may or may not be the same material as the first film. Before the two films are pressed together, one or both of the films may be wetted to render the film tacky to improve the bond between the two films. The films may then be sealed together, for example by heat sealing across the flange and the sealing surface formed by the divider. A suitable heat sealing temperature is, for example, 50° C to 300° C depending on the film material and other characteristics of the sealing process. A suitable sealing pressure is, for example, from 250 kPa to 800 kPa, which is likewise dependent on the film material and other characteristics of the sealing process. Other methods of sealing the films together may be used, for example infra-red, radio frequency, ultrasonic or laser solvent, vibration, electromagnetic, hot gas, hot plate, insert bonding, fraction sealing or spin welding. An adhesive may also be used. The adhesive may be applied to the films by spraying, coating, or passing the films through a mist of adhesive. The seal may also be water-soluble.

One suitable method for sealing the pouches is to use a roller having cavities corresponding to cavities 12 in mold 46. The roller is continuously rolled over the set of pouches. As a result, the heated roller only contacts the predetermined sealing surfaces. Alternatively, a moveable, returnable sealing device may be used to seal each surface for a period of time before moving to a new location to seal a new set of pouches.

Once the pouches are sealed, they may then be separated into individual pouches if desired. The pouches may be cut by any known method such as through the use of a sharp and/or hot item. In one embodiment, the pouches are cut in a continuous manner, and with constant speed. In some embodiments, the set of pouches may be transported to a separate cutting device surface where the cutting device operates.

The individual pouches may then be removed from mold 46 and carried away by a conveyor. The separation of the packages from cavities 12 in mold 46 may be facilitated by applying air under pressure to cavities 12 through vacuum holes 28, for example.

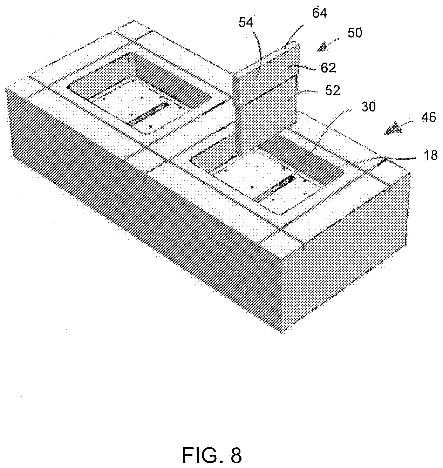

FIG. 8 is a front perspective view of mold 46 and an alternate divider 50 before divider 50 is inserted into mold 46. Like divider 34 shown in FIG. 4, divider 50 includes a tab 52 sized to be received in slot 30 and connected to a partition 54. Partition 54 includes substantially vertical planar side walls 62 extending between side walls 18 of cavity 12. Like divider 34, partition 54 further includes a substantially horizontally planar divider sealing surface 64 for sealing together material disposed in the cavity, such as a portion of two or more layers of film. Tab 52 is shaped and sized identically to tab 36 to allow for interchangeable use with mold 46 and slot 30.

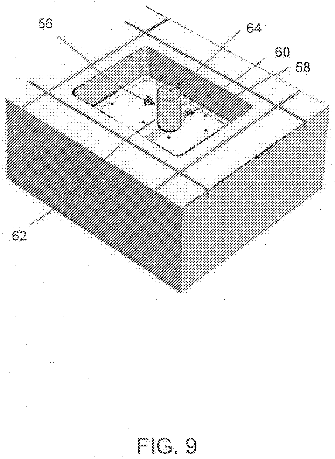

FIG. 9 is a front perspective view of mold 46 and an alternate divider 56 after divider 56 is inserted into mold 46. Like divider 34 and 50 described above, divider 56 includes a tab 58 sized to be received in slot 30 and connected to a partition 60. Partition 60 is substantially cylindrical shaped and includes a single curved vertical side wall 62 located in the middle of cavity 12.

Like dividers 34 and 50 described above, partition 54 further includes a substantially horizontally planar divider sealing surface 64 for sealing together material disposed in the cavity, such as a portion of two or more layers of film. However, unlike dividers 34 and 50, side wall 62 does not extend between side walls 18 of cavity 12. Instead, sealing surface 64 serves to create an ornamental sealing pattern rather than a multiple chamber unit dose pouch. Like tab 52, tab 58 is shaped and sized identically to tab 36 to allow for interchangeable use with mold 46 and slot 30.

While the invention has been described in terms of several preferred embodiments, there are alterations, permutations, and equivalents, which fall within the scope of this invention. The breadth and scope of the present invention should not be limited by any of the above-described exemplary embodiments or examples, but should be defined only in accordance with the following claims and their equivalents.

## Claims

1. Tooling for manufacturing a unit dose pouch, comprising:
a mold (10; 46);
a cavity (12) formed within the mold(10; 46), being open at a top surface (16) of the mold (10; 46); and
a divider (34; 50; 56) that forms a sealing surface (42; 64) for sealing material disposed in the cavity (12) ,
**characterized in that** the divider (34; 50; 56) is removably fixed within the cavity (12) to vary the volume of the cavity (12).

2. The tooling of claim 1, wherein the sealing surface (42) is flush with the top surface (16) of the mold (10; 46).

3. The tooling of claim 1, wherein the sealing surface (42) is configured to seal two pieces of water-soluble film.

4. The tooling of claim 1, wherein the sealing surface (42) is coplanar with the top surface (16) of the mold (10; 46).

5. The tooling of claim 1, wherein the mold (10; 46) is in the form of a drum.

6. The tooling of claim 1, wherein the mold (10; 46) includes a plurality of cavities (12).

7. The tooling of claim 1, wherein the divider (34; 50) is planar.

8. The tooling of claim 1, wherein the divider (56) is curved.

9. The tooling of claim 1, wherein the divider (34; 50; 56) extends between the ends of the cavity (12).

10. The tooling of claim 1, wherein the divider (34; 50; 56) is removably fixed within the cavity (12) by a friction fit between the divider (34; 50; 56) and the mold (10; 46).

11. The tooling of claim 1, wherein the sealing surface (42; 64) is sized to separate the cavity (12) into multiple compartments when the divider (34; 50; 56) is removably fixed within the cavity (12).

12. The tooling of claim 1, wherein the mold (10; 46) includes vacuum holes (28) formed therein, and
wherein the vacuum holes (28) are configured to allow a film to be vacuum formed into the cavity (12).

13. The tooling of claim 1, wherein the mold (10; 46) is made of a material having pores, and
wherein the pores are configured to allow a film to be vacuum formed into the cavity (12).

14. A method of manufacturing a unit dose pouch, comprising:
inserting a removable divider (34; 50; 56) into a mold (10; 46), the divider (34; 50; 56) forming a sealing surface (42; 64) for sealing material disposed in the cavity (12);
drawing a first film into the cavity (12) to create one or more pockets defined by the divider (34; 50; 56),
filling the one or more pockets with detergent;
placing a second film on top of the filled one or more pockets; and
sealing the first and second film together along the sealing surface (42; 64).

15. The method of claim 14, further comprising:
sealing the first and second film together along a second sealing surface (42; 64) located on the periphery of pouch.

## Patentansprüche

1. Werkzeug zur Herstellung eines Einheitsdosisbeutels, umfassend:
eine Form (10; 46);
einen Hohlraum (12), der innerhalb der Form (10; 46) gebildet und an einer oberen Oberfläche (16) der Form (10; 46) offen ist; und
einen Teiler (34; 50; 56), der eine Siegelfläche (42; 64) zum Versiegeln von im Hohlraum (12) angeordnetem Material bildet,
**dadurch gekennzeichnet, dass** der Teiler (34; 50; 56) abnehmbar innerhalb des Hohlraums (12) befestigt ist, um das Volumen des Hohlraums (12) zu variieren.

2. Werkzeug nach Anspruch 1, worin die Siegelfläche (42) bündig mit der oberen Oberfläche (16) der Form (10; 46) ist.

3. Werkzeug nach Anspruch 1, worin die Siegelfläche (42) dafür konfiguriert ist, zwei Teile einer wasserlöslichen Folie zu versiegeln.

4. Werkzeug nach Anspruch 1, worin die Siegelfläche (42) koplanar mit der oberen Oberfläche (16) der Form (10; 46) ist.

5. Werkzeug nach Anspruch 1, worin die Form (10; 46) in Form einer Trommel vorliegt.

6. Werkzeug nach Anspruch 1, worin die Form (10; 46) eine Mehrzahl von Hohlräumen (12) beinhaltet.

7. Werkzeug nach Anspruch 1, worin der Teiler (34; 50) planar ist.

8. Werkzeug nach Anspruch 1, worin der Teiler (56) gekrümmt ist.

9. Werkzeug nach Anspruch 1, worin sich der Teiler (34; 50; 56) zwischen den Enden des Hohlraums (12) erstreckt.

10. Werkzeug nach Anspruch 1, worin der Teiler (34; 50; 56) abnehmbar innerhalb des Hohlraums (12) durch einen Kraftschluss zwischen dem Teiler (34; 50; 56) und der Form (10; 46) befestigt ist.

11. Werkzeug nach Anspruch 1, worin die Siegelfläche (42; 64) dimensioniert ist, um den Hohlraum (12) in mehrere Fächer zu trennen, wenn der Teiler (34; 50; 56) abnehmbar innerhalb des Hohlraums (12) befestigt ist.

12. Werkzeug nach Anspruch 1, worin die Form (10; 46) darin gebildete Vakuumlöcher (28) beinhaltet, und
worin die Vakuumlöcher (28) dafür konfiguriert sind, dass eine Folie im Hohlraum (12) vakuumgeformt werden kann.

13. Werkzeug nach Anspruch 1, worin die Form (10; 46) aus einem Material mit Poren hergestellt wird, und
worin die Poren dafür konfiguriert sind, dass eine Folie im Hohlraum (12) vakuumgeformt werden kann.

14. Verfahren zur Herstellung eines Einheitsdosisbeutels, umfassend:
Einführen eines abnehmbaren Teilers (34; 50; 56) in eine Form (10; 46), wobei der Teiler (34; 50; 56) eine Siegelfläche (42; 64) zum Versiegeln von im Hohlraum (12) angeordneten Material bildet;
Ziehen einer ersten Folie in den Hohlraum (12), um eine oder mehrere vom Teiler (34; 50; 56) definierte Taschen herzustellen,
Füllen der einen oder mehreren Taschen mit Reinigungsmittel;
Platzieren einer zweiten Folie oben auf der gefüllten einen oder mehreren Taschen; und
Versiegeln der ersten und zweiten Folie miteinander entlang der Siegelfläche (42; 64).

15. Verfahren nach Anspruch 14, ferner umfassend:
Versiegeln der ersten und zweiten Folie miteinander entlang einer am Beutelumfang befindlichen zweiten Siegelfläche (42; 64).

## Revendications

1. Outillage pour fabriquer une pochette de dose unitaire, comprenant :
un moule (10, 46),
une cavité (12) formée à l'intérieur du moule (10, 46), ouverte au niveau d'une surface supérieure (16) du moule (10, 46), et
un séparateur (34, 50, 56) qui forme une surface de scellement (42, 64) pour sceller la matière disposée dans la cavité (12),
**caractérisé en ce que** le séparateur (34, 50, 56) est fixé de manière amovible à l'intérieur de la cavité (12) pour faire varier le volume de la cavité (12).

2. L'outillage de la revendication 1, dans lequel la surface de scellement (42) est au même niveau que la surface supérieure (16) du moule (10, 46).

3. L'outillage de la revendication 1, dans lequel la surface de scellement (42) est configurée pour sceller deux morceaux de film hydrosoluble.

4. L'outillage de la revendication 1, dans lequel la surface de scellement (42) est coplanaire avec la surface supérieure (16) du moule (10, 46).

5. L'outillage de la revendication 1, dans lequel le moule (10, 46) est en forme de tambour.

6. L'outillage de la revendication 1, dans lequel le moule (10, 46) comprend une pluralité de cavités (12).

7. L'outillage de la revendication 1, dans lequel le séparateur (34, 50) est planaire.

8. L'outillage de la revendication 1, dans lequel le séparateur (56) est incurvé.

9. L'outillage de la revendication 1, dans lequel le séparateur (34, 50, 56) s'étend entre les extrémités de la cavité (12).

10. L'outillage de la revendication 1, dans lequel le séparateur (34, 50, 56) est fixé de manière amovible à l'intérieur de la cavité (12) par un ajustement à friction entre le séparateur (34, 50, 56) et le moule (10, 46).

11. L'outillage de la revendication 1, dans lequel la surface de scellement (42, 64) est dimensionnée pour séparer la cavité (12) en multiples compartiments quand le séparateur (34, 50, 56) est fixé de manière amovible à l'intérieur de la cavité (12).

12. L'outillage de la revendication 1, dans lequel le moule (10, 46) comprend des orifices d'aspiration (28) formés à l'intérieur, et
dans lequel les orifices d'aspiration (28) sont configurés pour permettre à un film d'être formé sous vide dans la cavité (12).

13. L'outillage de la revendication 1, dans lequel le moule (10, 46) est fabriqué en une matière munie de pores, et
dans lequel les pores sont configurés pour permettre à un film d'être formé sous vide dans la cavité (12).

14. Un procédé permettant de fabriquer une pochette de dose unitaire, comprenant les étapes consistant à :
insérer un séparateur amovible (34, 50, 56) dans un moule (10, 46), le séparateur (34, 50, 56) formant une surface de scellement (42, 64) pour sceller la matière disposée dans la cavité (12),
aspirer un premier film dans la cavité (12) pour créer une ou plusieurs poches définies par le séparateur (34, 50, 56),
remplir la ou les poches de détergent,
placer un deuxième film au-dessus de la ou des poches remplies, et
sceller le premier et le deuxième film l'un à l'autre le long de la surface de scellement (42, 64).

15. Le procédé de la revendication 14, comprenant en sus l'étape consistant à :
sceller le premier et le deuxième film l'un à l'autre le long d'une deuxième surface de scellement (42, 64) située sur la périphérie de la pochette.
